# FASCICULE DE BREVET EUROPEEN

(11) **EP 0 995 336 B1**
(45) Date de publication et mention de la délivrance du brevet: **19.12.2001**
(21) Numéro de dépôt: 98935101.0
(22) Date de dépôt: 06.07.1998
(51) Int. Cl.: H04R 3/04

(54) **PROCEDE ET APPAREIL POUR FORMATER LE SIGNAL AUDIO NUMERIQUE POUR L'USAGE DE LA REPRODUCTION SONORE**
VERFAHREN UND VORRICHTUNG ZUR FORMATIERUNG VON NUMERISCHEN TONSIGNALEN ZUR ANWENDUNG BEI TONWIEDERGABE
METHOD AND APPARATUS FOR FORMATTING THE DIGITAL AUDIO SIGNAL FOR USE OF THE SOUND REPRODUCTION

(30) Priorité: 07.07.1997 FR 9708822
(43) Date de publication de la demande: 26.04.2000
(73) Titulaire: Perrichon, Claude Annie, 38080 L'Isle d'Abeau (FR); Charbonneaux, Marc, 69004 Lyon (FR); Piccaluga, Pierre, 38080 L'Isle d'Abeau (FR)
(72) Inventeur: PICCALUGA, Pierre, F-38080 L'Isle d'Abeau (FR)
(74) Mandataire: Richebourg, Michel François
(86) Numéro de dépôt international: FR9801437
(87) Numéro de publication internationale: WO9903303

(56) Documents cités:
- EP-A- 0 543 224
- WO-A-86/03927
- WO-A-96/31086
- US-A- 4 515 997
- US-A- 4 773 096

## Description

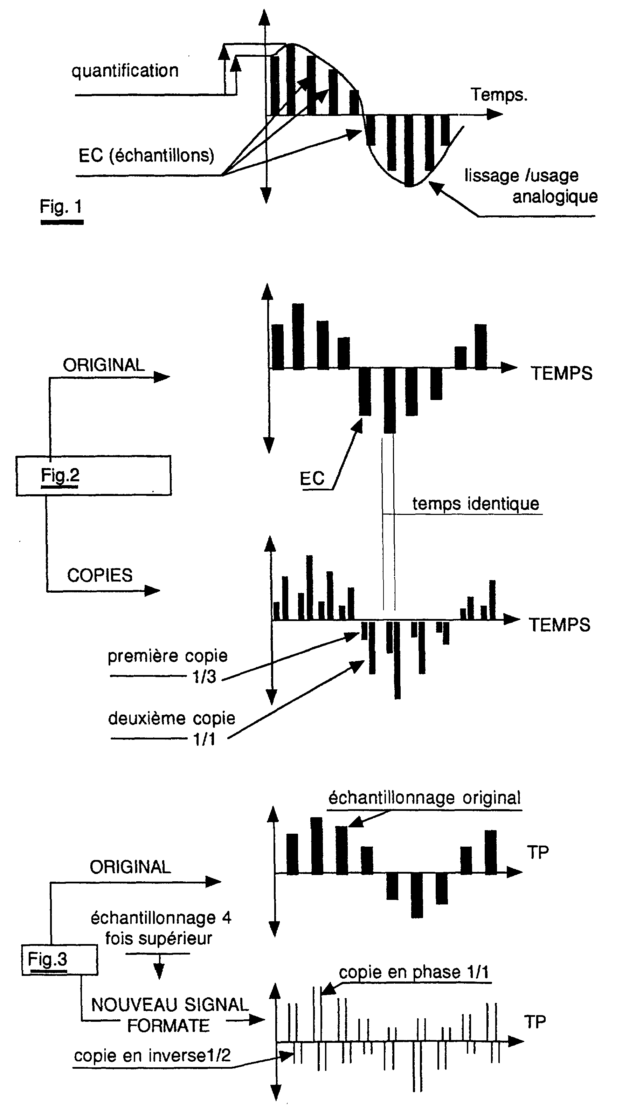

Le principe des alimentations des transducteurs électro-acoustiques par les amplificateurs de type analogique est le plus utilisé. En effet, le déplacement analogique de la membrane suit des sinusoïdes, courbes prélevées à l'enregistrement. La condition utilisable du signal audio électrique , est le signal, recueilli par le ou les micros, ou issu directement d'échantillonneurs numériques, qui est lissé pour l'usage analogique. Le signal d'origine numérique sonore utilisé a une intensité et une fréquence de 44 100 échantillons par seconde, suivant un modèle représentatif bien connu (Fig.1).Le procédé est le signal d'origine copié, et reproduit, pour obtenir un nouveau signal numérique pour la commande électrique des transducteurs électro-acoustiques.

En effet, la réponse impulsionnelle des transducteurs électro-acoustiques n'est pas conforme aux signaux émis par le principe numérique . Un effet de trainage est remarqué sur les impulsions des membranes qui ne s'arrêtent pas quand l'impulsion est finie. L'impulsion mécanique se prolonge par l'effet de la masse de la membrane pour les impulsions fortes. Les impulsions fines sont alors dans cette circonstance masquées. Il devient nécessaire de remédier à cet inconvénient par le présent procédé, en imposant au moins une information supplémentaire pour contrôler les effets mécaniques des mouvements d'emballement des membranes .

Le document WO-A-9 631 086 divulgue un procédé et un dispositif où le signal est déphasé et où l'amplitude du signal déphasé est utilisé pour produire un signal de contrôle. Il y a un détecteur d'amplitude qui donne une information séparée au transducteur afin d'ajuster le ou de pouvoir faire varier le niveau du signal de puissance de sortie.

Le présent procédé est un logiciel d'interface, contenant la correction de commande particulière de compensation programmée adapté pour transducteur électro-acoustique.

Deux possibilités sont retenues pour pallier aux effets d'emballement mécanique, soit une multiplication du signal audio ) numérique avec des valeurs plus petites mais en phase , soit des impulsions en inversion de phase. Pour cela le procédé est une utilisation des signaux numériques sonores d'origine en référence qui sont copiés et reproduits en plusieurs exemplaires, en un nouvel agencement ne modifiant pas le temps de l'original. La commande est précise , nécessaire pour vaincre les inerties mécaniques des membranes. Le paramètre temps est une constante, aussi quand les informations doublent ou triplent, la fréquence des signaux double ou triple proportionnellement à la multiplication des copies reproduites. Ces copies de signaux peuvent avoir des valeurs d'intensité différentes , par rapport à l'original et entres elles. Par exemple (Fig.2) une période de temps est représentée sur l'horizontale , où sont présentes les valeurs (EC), des signaux sont copiés et la période de temps ne change pas La première copie reproduite a un rapport d'échelle de 1/3 de l'original et une deuxième copie a un rapport de 1/1 . Il est évident que la reproduction multiple des signaux du nouveau signal sonore , correspond à un ajustement des fréquences des signaux , doublés, triplés, quadruplés autant de fois que la multiplication du signal d'origine. Il ne s'agit pas d'écho qui prolonge la note, mais d'une méthode compensant les inerties des membranes, adaptée aux efforts dynamiques, qui par la masse dissocient les paramètres tension courant de l'instant. Un lissage du signal nouvellement formaté est prévu pour obtenir un signal analogique.

Ce signal audio numérique, ou analogique peut être directement appliqué aux bornes de au moins un transducteur électro acoustique.

Cette reproduction multiple du signal d'origine enregistré peut avoir d'une part sa valeur d'intensité différente et d'autre part un déphasage, un glissement pouvant aller jusqu'à sa valeur inverse totale de phase, par rapport au signal d'origine. Ce procédé est caractérisé par la reproduction, multiple des originaux (Fig.3) dit "signal d' origine" d'un temps (TP) donné, en un nouveau signal formaté de 4 fois la fréquence d'origine dont deux copies sont de phase inverse, et de 1/2 valeur d'intensité . Ces signaux en inversion de phase recalent la membrane dont l'inertie la déporterait trop loin et elle prendrait un retard pour l'impulsion suivante, ce qui crée la dissociation tension courant.

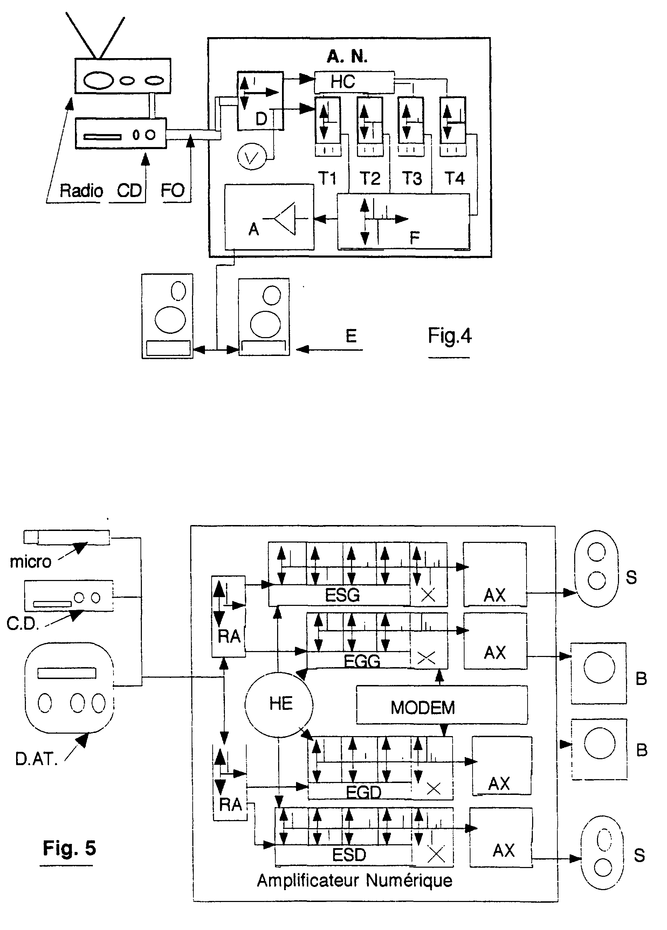

Le procédé peut copier le message original et le reproduire suivant toutes les variantes des combinaisons décrites et de facon identique pour chaque signal d'origine, par séquence cyclique d'ordre reproduit, dans le rapport d'échelle d'intensité et de phase T1 , T2, T3, T4 (Fig4).

Le procédé a son appareil de formatage de signal audio pour transducteur électro acoustique, caractérisé par un référentiel de signal numérique d'origine enregistré sur un support ou en direct , copié par reproduction de l'original, suivant le procédé déterminant un logiciel d'interface entre un signal numérique d'origine, et un signal numérique nouvellement formaté pour une commande électrique des mouvements mécaniques mieux adaptés . Les nouveaux signaux sont au moins deux copies du signal original. Les copies des signaux peuvent être en phase ou en inversion totale de phase par rapport à l'original. Les intensités de chaque signal peuvent être d'une fraction de la valeur d'intensité de l'original.

Un appareil est réalisé par l'homme de l'art, comme exemple (Fig.4) dans une chaine de reproduction sonore, ayant un récepteur radio un lecteur de disque laser (CD) , et un système de formatage suivant le procédé, intégré dans un amplificateur numérique (AN), pour alimenter les enceintes acoustiques (E). L'amplificateur reçoit le message numérique par le faisceau optique (FO) décode le signal audio numérique, par le décodeur (D) , qui va établir le signal d'origine. Ce signal est transféré à quatre échantillonneurs (T1 ,T2 ,T3 ,T4) gérés par une horloge commune. Un micro processeur (HC) muni d'un relais chargé du balayage régulier et cyclique programme les activités des quatre échantillonneurs réglables par rapport aux valeurs du décodeur (D). Chaque échantillonneur, par copie de signal d'origine reproduit , utilise deux potentiomètres de programmation, l'un pour positionner le rapport d'échelle des intensités et l'autre pour la phase des intensités, entre la synchronicité de phase et le glissement d'inversion de phase par rapport à l'original. Dans ce cas l'échantillonneur (T1) est identiquement réglé comme l'échantillon du décodeur, signal d'origine.

L'échantillonneur (T2) est réglé en valeur inverse de phase de (T1), avec la même valeur d'intensité . L'échantillonneur (T3) est réglé à 1/3 d'intensité de T1 et en phase avec (T1). L'échantillonneur (T4) en phase avec (T1) et 1/2 d'intensité de (T1). Le signal formaté (F) est amplifié par l'amplificateur (A) réglé en puissance par le pontentiomètre (V) déterminant la sensibilité du décodeur.

Les appareils de formatage de signal audio numérique suivant le présent procédé ont besoin d'une fréquence 4 fois supérieure pour les médiums et aigus, et seulement de 3 fois supérieure pour les basses. Le système de reproduction sonore (Fig.5) constitué d'un micro, d'un lecteur/enregistreur de cassette audio numérique et d'un lecteur de disque laser, qui ne sont pas exhaustifs, sont reliés à l'ampli numérique de puissance à quatre sorties indépendantes, de 2 basses (B) et de 2 satellites (S). L'amplificateur nécessite des décodeurs (RA), qui établissent le signal original. Une horloge électronique dans une puce électronique (HE) coordonne l'ordre d'action, programmé régulier et cyclique des quatorze échantillonneurs qui déterminent le profil du nouveau message sonore . Les canaux recoivent respectivement trois échantillonneurs couplés pour les graves (EGD, EGG) réglés tous en phase dans un rapport de 1/3 en diminution du premier par rapport au deuxième et de 1/3 du deuxième par rapport au troisième. Le signal nouvellement formaté par le microprocesseur (X) est amplifié par l'amplificateur (AX) pour alimenter les caissons de basses. Les échantillonneurs (ESG,ESD) à quatre niveaux alimentent les satellites par les amplificateurs (AX). Les fréquences (ESG,ESD) sont de quatre fois la vitesse de (RA) tandis que celles de (EGG,EGD) sont de trois fois la vitesse de (RA). Un modem de lissage est prévu pour la lecture analogique, cet appareil n'est pas limitatif , c'est un exemple.Tous les moyens électroniques à composant passif ou actif de semi conducteur ou toutes les formes de micro-processeurs, circuits intégrés , ou produits à devenir dans le domaine de la connectique, électronique active, peuvent être utilisés pour réaliser ces appareils.

Le présent procédé et appareil adapte le signal numérique sonore en un signal numérique de commande de tous les transducteurs électro dynamiques.Ce principe de correction, est utilisable par le monde de l'audio et l'audiovisuel.

## Revendications

1. Procédé de formatage de signal audio numérique, pour la commande de au moins un transducteur électro acoustique à partir d'un signal numérique original, de signal électrique sonore, modifié en un signal numérique sonore par copie du signal d'origine, à une fréquence plus élevée, proportionnelle aux copies, dont certains des exemplaires reproduits ont des valeurs d'intensités différentes de l'original afin de contrôler les effets d'emballement mécanique des transducteurs électro-acoustiques.

2. Procédé selon la revendication (1) **caractérisé par** l'inversion de phase des copies, qui ont des intensités pouvant aller jusqu'à l'inversion totale de phase par rapport au signal d'origine.

3. Procédé selon la revendication (1) ou (2) où le signal numérique nouvellement formaté est lissé pour l'usage en signal analogique.

4. Appareil pour formater un signal numérique de commande, directement appliqué aux bornes de au moins un transducteur électro acoustique, à partir d'un signal d'origine d'un enregistreur numérique ou d'un support numérique sonore, en un nouveau signal audio numérique sonore dont les signaux d'origine sont copiés et reproduits à des fréquences plus élevées , créés par des échantillonneurs spécifiques pour chacun des signaux copiés, **caractérisés en ce que** les valeurs d'intensités et de phases des nouveaux signaux sont réglables, par deux potentiomètres distincts, et dont l'ordre d'action des échantillonneurs (T1,T2,T3,T4) est cyclique et régulier,et est assuré par une horloge électronique (HE ).

5. Appareil selon la revendication (4) **caractérisé en ce que** la fréquence des échantillonneurs est proportionnelle au nombre de reproduction des copies , soit la fréquence doublée s' il y a deux copies, quadruplée s' il y a quatre copies du signal d'origine.

6. Appareil selon les revendications (4) ou (5) **caractérisé par** l'adjonction d'un modem de lissage, pour une fonction analogique.

## Patentansprüche

1. Verfahren zum Formatieren eines digitalen Audiosignals zur Ansteuerung mindestens eines elektroakustischen Wandlers auf Grundlage eines digitalen Ursprungssignals, und zwar eines durch Kopie des Ursprungssignals in ein digitales Akustiksignal in eine höhere Frequenz versetzten elektrischen Schallsignals, die proportional zu den Kopien ist, von denen bestimmte reproduzierte Exemplare Intensitätswerte haben, die sich vom Original unterscheiden, um die Auswirkungen mechanischen Hochlaufens der elektroakustischen Wandler zu steuern.

2. Verfahren nach Anspruch 1, durch Phasenumkehr der Kopien **gekennzeichnet**, die Intensitäten besitzen, die gegenüber dem Ursprungssignal bis zur totalen Phasenumkehr gehen kann.

3. Verfahren nach Anspruch 1 oder 2, bei dem das neu formatierte digitale Signal zur Verwendung als analoges Signal geglättet wird.

4. Vorrichtung zur Formatierung eines digitalen Steuersignals, das direkt an die Klemmen mindestens eines elektroakustischen Wandlers auf Grundlage eines Ursprungssignals eines digitalen Aufzeichnungsgeräts oder eines digitalen Tonträgers als neues digitales Audiotonsignal angelegt wird, dessen Ursprungssignale kopiert und in höheren Frequenzen wiedergegeben werden, die durch spezifische Abtaster für jedes der kopierten Signale erzeugt werden, **dadurch gekennzeichnet, dass** die Intensitäts- und Phasenwerte der neuen Signale durch zwei getrennte Potentiometer regelbar sind, und bei der die Ablauffolge der Abtaster (T1, T2, T3, T4) zyklisch und regelmäßig ist und durch einen elektronischen Taktgeber (HE) bewerkstelligt wird.

5. Vorrichtung nach Anspruch 4, **dadurch gekennzeichnet, dass** die Frequenz der Abtaster proportional zur Anzahl der reproduzierten Kopien ist, entweder die doppelte Frequenz, wenn es sich um zwei Kopien handelt, oder die vierfache Frequenz, wenn es sich um vier Kopien des Ursprungssignals handelt.

6. Vorrichtung nach den Ansprüchen 4 oder 5, **gekennzeichnet durch** das Hinzufügen eines Glättungsmodems für eine analoge Funktion.

## Claims

1. Method for formatting a digital audio signal for controlling at least one electro-acoustic transducer from an original digital signal, of an electric sound signal, modified into a digital sound signal by copying the original signal at a higher frequency proportional to the copies, some of which reproduced copies have intensity values different from the original so as to control the mechanical runaway effects of electro-acoustic transducers.

2. Method according to claim 1, **characterised by** the phase inversion of the copies which have intensities possibly ranging up to the total phase inversion with respect to the original signal.

3. Method according to claim (1) or (2) wherein the newly-formatted digital signal is smoothed for use as an analog signal.

4. Device for formatting a digital control signal directly applied to the terminals of at least one electro-acoustic transducer from an original signal of a digital recorder or a digital sound medium into a new digital sound audio signal whose original signals are copied and reproduced at higher frequencies created by specific samplers for each of the copied signals, **characterised in that** the phase and intensity values of the new signals are adjustable by two distinct potentiometers and whose order of action of the samplers (T1, T2, T3, T4) is cyclic and regular and is ensured by an electronic clock (HE).

5. Device according to claim (4), **characterised in that** the frequency of the samplers is proportional to the reproduced number of copies, namely the doubled frequency if there are two copies and quadrupled if there are four copies of the original signal.

6. Device according to claims (4) or (5), **characterised by** the addition of a smoothing modem for an analog function.
